# EUROPÄISCHE PATENTSCHRIFT

(11) **EP 1 057 716 B1**
(45) Veröffentlichungstag und Bekanntmachung des Hinweises auf die Patenterteilung: **25.08.2004**
(21) Anmeldenummer: 99110748.3
(22) Anmeldetag: 04.06.1999
(51) Int. Cl.: B62D 21/12, B60G 25/00, B60G 7/02

(54) **Achskonstruktion für Nutzfahrzeuge, Nutzfahrzeuganhänger und -auflieger**
Axle construction for utility vehicles, their trailers and semi-trailers
Construction d'essieu pour véhicules utilitaires, leurs remorques et semi-remorques

(43) Veröffentlichungstag der Anmeldung: 06.12.2000
(73) Patentinhaber: BPW Bergische Achsen Kommanditgesellschaft, 51674 Wiehl (DE)
(72) Erfinder: Adolfs, Manfred Dipl.-Ing., 51702 Bergneustadt (DE); Kopplow, Hans Werner Dipl.-Ing., 51545 Waldbröl (DE); Michels, Manfred, 51067 Köln (DE); Valpertz, Frank Dipl.-Ing., 57489 Drolshagen (DE)
(74) Vertreter: Christophersen, Ruth

(56) Entgegenhaltungen:
- EP-A- 0 421 556
- EP-A- 0 890 501
- DE-A- 2 725 599
- US-A- 2 633 203
- US-A- 3 397 885

## Beschreibung

Die Erfindung betrifft eine Achskonstruktion für Nutzfahrzeuge, Nutzfahrzeuganhänger und -auflieger nach dem Oberbegriff des Patentanspruchs 1.

Bei der Auslegung von Achskonstruktionen für Nutzfahrzeuge und insbesondere luftgefederten Achskonstruktionen ist es wichtig, die auftretenden Seitenkräfte sinnvoll auf den Fahrzeugrahmen abzuleiten. Aus der Praxis ist es hierzu bekannt, die beiden Stützen, an denen die Längslenker des Fahrzeuges schwenkbar angelenkt sind, über einen biegesteifen Querträger miteinander zu verbinden. Hierzu wird der Querträger an beiden Stützen in Höhe des Bolzens für die Längslenker angeschweißt.

Des weiteren wurde bereits vorgeschlagen, zwecks weiterer Erhöhung der Festigkeit des Systems diesen Querträger mit Hilfe von biegesteifen Profilen diagonal gegenüber dem Fahrzeugrahmen auszusteifen. Bei dieser Lösung wird der Querträger mit dem Ziel einer Aufnahme der Seitenkräfte sehr stark auf Biegung beansprucht, wobei sich zum Beispiel bei Kurvenfahrt eine S-förmige Biegelinie des Querträgers einstellt. Um diesen Belastungen standzuhalten, muß der Querträger sehr stabil und schwer ausgelegt werden. Auch die zusätzlich angeschweißten Diagonalstreben, die der Aussteifung der hochbelasteten Schweißverbindungen im Bereich der Anbindung des Querträgers an die Stützen dienen, werden auf Biegung beansprucht. Die Aussteifung über die Diagonalstreben ergibt im Übergangsbereich zum Querträger einen Steifigkeitssprung, der zu einer Lebensdauerbeeinträchtigung der zwar sehr steifen, aber auch sehr schweren Achskonstruktion führen kann.

Eine insbesondere für Nutzfahrzeuganhänger bestimmte Achskonstruktion mit den Merkmalen des Oberbegriffs ist aus der EP 0 890 501 A1 bekannt. Die die Längslenker führenden Stützen sind seitlich jeweils gegenüber der anderen Fahrzeugseite abgestützt, wozu jede Stütze über Zugstreben diagonal mit der jeweils anderen Fahrzeugseite verbunden ist. Zu der Achskonstruktion gehört ferner ein die beiden Stützen miteinander verbindender Druckstab, dessen Enden jeweils starr an den Stützen befestigt sind.

Bei Kurvenfahrt wird die eine der diagonalen Zugstreben auf Zug beansprucht mit der Folge einer tendenziellen Verlängerung, wohingegen die andere Strebe auf Druck belastet wird mit der Folge einer tendenziellen Verkürzung, verbunden mit einer Stauch- und damit Knickgefahr.

Aus der DE 27 25 599 A1 ist die Verwendung einer Diagonalverstrebung für die schwenkbeweglichen Teile einer blattgefederten Fahrzeugachse bekannt. Jede der beiden Diagonalstreben stützt sich einerseits gegenüber dem Fahrzeugrahmen und andererseits gegenüber einem Schwenkhebel ab, welcher das hintere Stützlager der Blattfeder bildet. Die Diagonalstreben sind sehr kräftig ausgebildet, da sie im Falle einer Einfederung des Fahrzeuges nicht nur Kräften quer zur Fahrzeuglängsrichtung, sondern auch einer Bewegung in Fahrzeuglängsrichtung unterliegen.

Der Erfindung liegt die **Aufgabe** zugrunde, eine eine elastische Aufnahme der Rahmendeformationen ermöglichende Achskonstruktion zu schaffen, die zum Beispiel bei Kurvenfahrt einen Ausgleich der Verformungen in den beteiligten Bauteilen ermöglicht.

Die **Lösung** dieser Aufgabe ist bei einer Achskonstruktion nach dem Oberbegriff dadurch gekennzeichnet, daß die Zugstreben jeweils mit einer eine dauernde Zugspannung in den Zugstreben erzeugenden Feder versehen sind.

Die diagonal angeordneten Zugstreben dienen dazu, die vor allem bei Kurvenfahrt auftretenden Seitenkräfte in den Fahrzeugrahmen zu übertragen. Da diese Übertragung je nach Richtung der Kurvenfahrt jeweils nur mit der einen der beiden Fahrzeugseiten möglich ist, dient der zusätzliche Druckstab dazu, den Abstand zwischen den Stützen auf der linken und auf der rechten Fahrzeugseite konstant zu halten, d.h. die Stützen gegeneinander abzustützen. Da die Zugstreben mit einer darin eine dauernde Zugspannung aufrechterhaltenden Feder versehen sind, lassen sich die elastischen Verformungen in den beteiligten Bauteilen ausgleichen, so daß die Zugstreben dauerhaft unter Vorspannung stehen. Wegen der erzielbaren hohen Kräfte und der geringen Federwege bietet sich für den Einsatz als Feder insbesondere ein Tellerfederpaket an.

Der Angriffswinkel für die in den Zugstrebenden wirkenden Zugbelastungen ist besonders günstig, wenn, wie dies mit einer Weiterbildung der erfindungsgemäßen Achskonstruktion vorgeschlagen wird, die Anbindung der Zugstreben an der jeweils anderen Fahrzeugseite an dem dortigen Längsträger erfolgt. Vorzugsweise erfolgt die Anbindung in diesem Fall an in den Längsträgern eingeschweißten und sich quer zur Fahrzeuglängsrichtung erstreckenden Blechen.

Die Befestigung der diagonal verlaufenden Zugstreben sollte möglichst elastisch sein, um nur die ihnen zugedachten Zug- und möglichst geringen Biegebelastungen aufnehmen zu müssen. Hierzu wird mit einer Ausgestaltung der Achskonstruktion vorgeschlagen, daß die beiden Enden der Zugstreben über Gelenke an der Stütze befestigt sind, die keine Momenten übertragen.

Auch die beidseitige Befestigung des Druckstabes sollte so erfolgen, daß überwiegend Druckspannungen und möglichst keine Biegebelastungen aufgenommen werden. Hierzu wird mit einer weiteren Ausgestaltung vorgeschlagen, daß die Enden des Druckstabs über Gelenke an den Stützen befestigt sind, die keine Momenten übertragen.

Gemäß einer weiteren Ausgestaltung erfolgt die stützenseitige Befestigung der Zugstreben und/oder des Druckstabs an einem Bolzen, der den Längslenker gelenkig mit der Stütze verbindet. Auf diese Weise werden die auftretenden Kräfte direkt von den Längslenkern ohne Umwege in die Verstrebungsbauteile übertragen. Die Stützen selbst werden daher nur gering beansprucht und können leichter und langlebiger ausgeführt werden. Da die Zugstreben im wesentlichen nur Zugkräfte übertragen müssen, werden als Zugstreben Seile oder auch zugbelastbare Stangen bevorzugt.

Ferner wird vorgeschlagen, daß die Zugstreben jeweils mit einer in Längsrichtung der Zugstreben wirkenden Spanneinrichtung versehen sind. Die Spanneinrichtung ermöglicht eine nachträgliche Montage der Verstrebungsbauteile, ferner können Fertigungstoleranzen des Fahrzeugrahmens und der benachbarten Teile ausgeglichen werden.

Weitere Einzelheiten und Vorteile werden nachfolgend anhand mehrerer auf der Zeichnung dargestellter Ausführungsbeispiele erläutert. Auf der Zeichnung zeigen:
- Fig. 1: in Seitenansicht die Achskonstruktion eines luftgefederten Nutzfahrzeuganhängers;
- Fig. 2: in einer ersten Ausführungsform eine Längsansicht der Achskonstruktion nach Fig. 1 in Ansicht A;
- Fig. 3: in einer zweiten Ausführungsform eine Längsansicht der Achskonstruktion nach Fig. 1 in Ansicht A;
- Fig. 4: in einer dritten Ausführungsform eine Längsansicht der Achskonstruktion nach Fig. 1 in Ansicht A und
- Fig. 5a: einen bei der Achskonstruktion nach Figur 4 verwendeten Bolzen in Einzeldarstellung;
- Fig. 5b: den Bolzen nach Figur 5a in einer Ansicht von unten;
- Fig. 6: in einer vierten Ausführungsform eine Längsansicht der Achskonstruktion nach Figur 1 in Ansicht A;
- Fig. 7: in einer fünften Ausführungsform eine Längsansicht der Achskonstruktion nach Figur 1 in Ansicht A und
- Fig. 8: in einer sechsten Ausführungsform eine Längsansicht der Achskonstruktion nach Figur 1 in Ansicht A

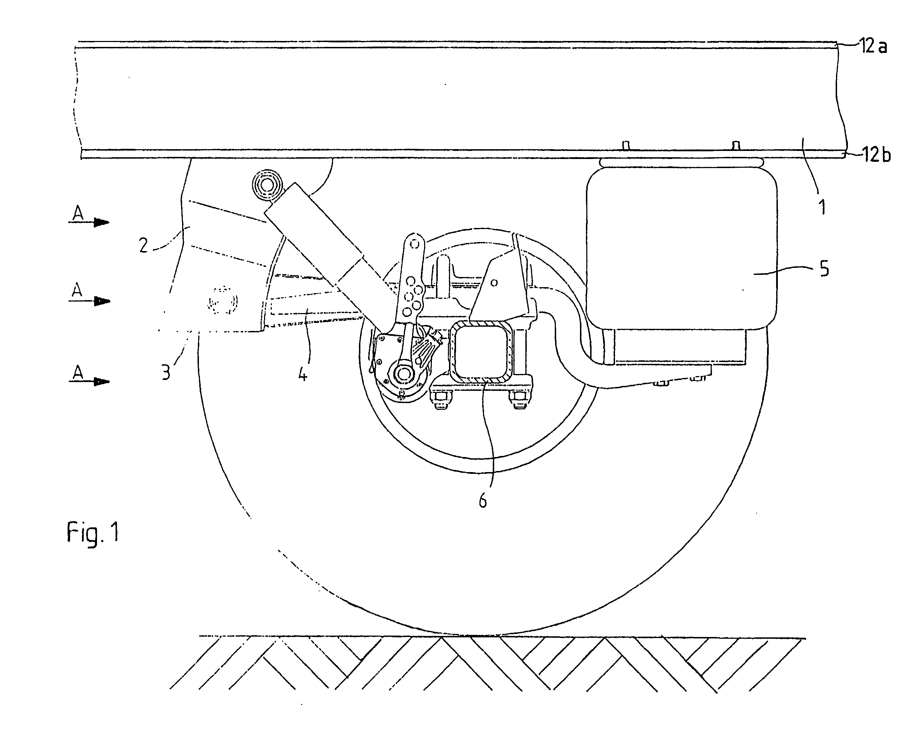

Figur 1 zeigt in Seitenansicht eine Achskonstruktion für einen Nutzfahrzeuganhänger mit einer unter den Längsträgem 1 des Fahrzeugrahmens montierten Stützen 2 mit durch die Stützen 2 hindurchgeführten Bolzen 3 für die Längslenker 4. An seinem anderen, hinteren Ende stützt sich jeder Längslenker 4 über eine Luftfeder 5 an dem Längsträger 1 des Fahrzeugrahmens ab. An dem Längslenker 4 ist das Achsrohr 6 der Fahrzeugachse befestigt. Beim Ausführungsbeispiel ist der Längslenker 4 eine Lenkerfeder. Ebenso kann als Längslenker 4 ein Kastenlenker Anwendung finden.

Der Längsträger 1 des Fahrzeugrahmens ist, wie im Fahrzeugbau häufig anzutreffen, ein Doppel-T-Träger. Mehrere Achsaggregate der in Figur 1 dargestellten Art können hintereinander unter dem Fahrzeugrahmen angeordnet sein.

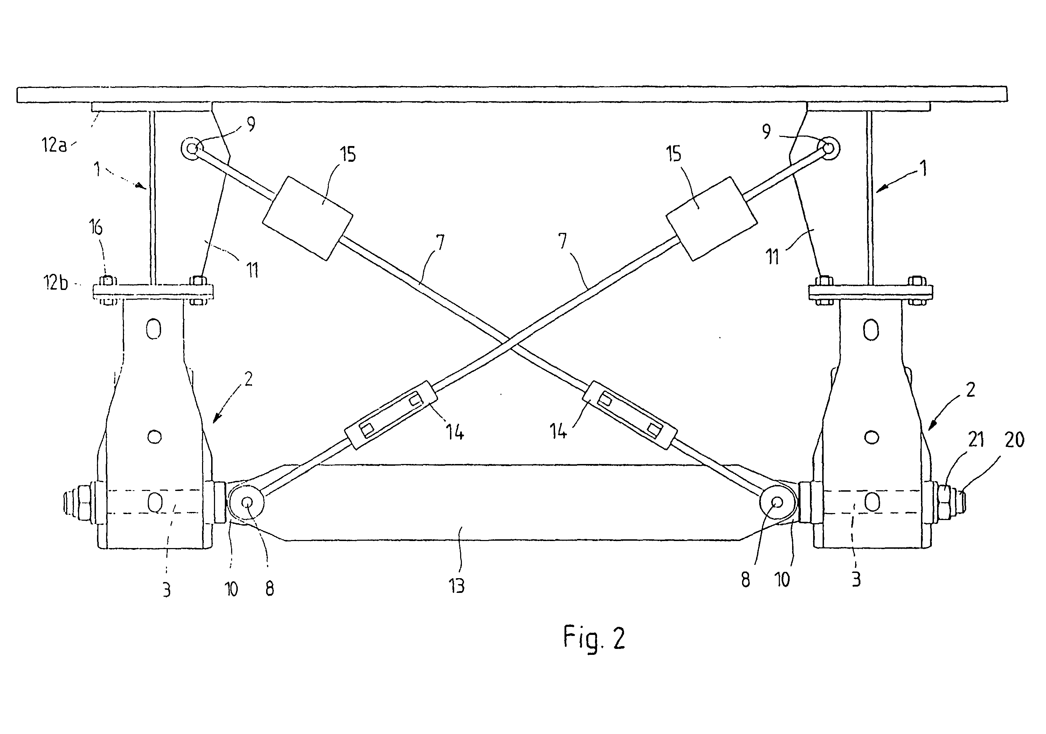

Figur 2 läßt erkennen, wie sowohl die auf der linken als auch die auf der rechten Fahrzeugseite angeordnete Stütze 2 erfindungsgemäß seitlich gegenüber der jeweils anderen Fahrzeugseite abgestützt ist. Hierzu sind diagonale Zugstreben 7 vorhanden, die jeweils mit ihrem einen Ende 8 an der Stütze 2 und mit ihrem anderen Ende 9 an dem Längsträger befestigt sind. Bei dem dargestellten Ausführungsbeispiel ist das stützenseitige Ende 8 nicht unmittelbar an der Stütze 2 befestigt, sondern an dem durch die Stütze 2 hindurchgeführten Bolzen 3, welcher die Verbindung zwischen der Stütze 2 und der Lenkerfeder 4 herstellt. Der Bolzen 3 ist zu diesem Zweck mit einem Bolzenkopf 10 versehen, an dem das Ende 8 der Zugstrebe 7 gelenkig befestigt ist. Durch diese gelenkige Befestigung wird die von jeder Zugstrebe 7 ausgeübte Zugkraft momentenfrei auf den Bolzenkopf 10 und damit auf die Stütze 2 übertragen.

Die Anbindung des jeweils anderen Endes 9 jeder Zugstrebe 7 an der jeweils anderen Fahrzeugseite erfolgt an dem dortigen Längsträger 1, wozu in das Doppel-T-Profil des Längsträgers ein sich quer zur Fahrzeuglängsrichtung erstreckendes Blech 11 eingeschweißt ist. Die Befestigung der Zugstrebe 7 erfolgt im oberen Teil dieses Bleches 11 und damit näher an dem Obergurt 12a als an dem Untergurt 12b des Längsträgers 1. Auf diese Weise ergibt sich eine Verstrebung der beiden Zugstreben 7 mit günstigem Winkel der sich einstellenden Diagonale.

Zur Befestigung der Zugstreben 7 an den Längsträgern 1 sind Bohrungen in den eingeschweißten Blechen 11 vorhanden, in die hakenförmige Enden der Zugstreben 7 oder an den Enden angebrachte Gabelköpfe eingehängt sind.

Zur seitlichen Abstützung der Stützen 2 gegenüber der jeweils anderen Fahrzeugseite ist ferner ein starrer Druckstab 13 zwischen den beiden Stützen 2 vorgesehen. Auch die Enden des Druckstabes 13 sind über momentenfreie Gelenke an den Stützen befestigt, wobei auch hier wiederum eine Ausführungsform bevorzugt wird, bei der die Krafteinleitung nicht unmittelbar in die Stützen 2 erfolgt, sondern mittelbar über die Bolzen 3 mit den Bolzenköpfen 10. Da sowohl die Zugstreben 7 als auch der Druckstab 13 gelenkig an dem jeweiligen Bolzen 3 befestigt sind, erfolgt in beiden Fällen eine Übertragung der Druck- bzw. Zugkräfte auf die Stützen frei von Biegemomenten. Hierbei sind die sich reibungsfrei kreuzenden Zugstreben 7 nahezu ausschließlich auf die Übertragung von hohen Zugkräften ausgelegt, wohingegen der Druckstab 13 überwiegend Druckkräfte überträgt. Da über die Zugstreben 7 Druckkräfte nicht übertragen werden, können die Zugstreben 7 zum Beispiel als Seile ausgebildet sein, was zu einem sehr geringen Gewicht der Verstrebung führt.

Bei der Ausführungsform nach den Figuren 2, 3 und 7 erfolgt die Anlenkung des Druckstabes 13 mit dem gelenkigen Ende 8 der Zugstrebe 7 auf einer gemeinsamen Achse.

Zur Einstellung der Länge der Zugstreben 7 sind diese jeweils mit einer Spanneinrichtung 14 versehen. Ferner sind die Zugstreben 7 jeweils mit einer eine dauernde Zugspannung in den Zugstreben aufrechterhaltenden Feder 15 versehen. Hierfür besonders geeignet ist eine Druckfeder aus einem Tellerfederpaket.

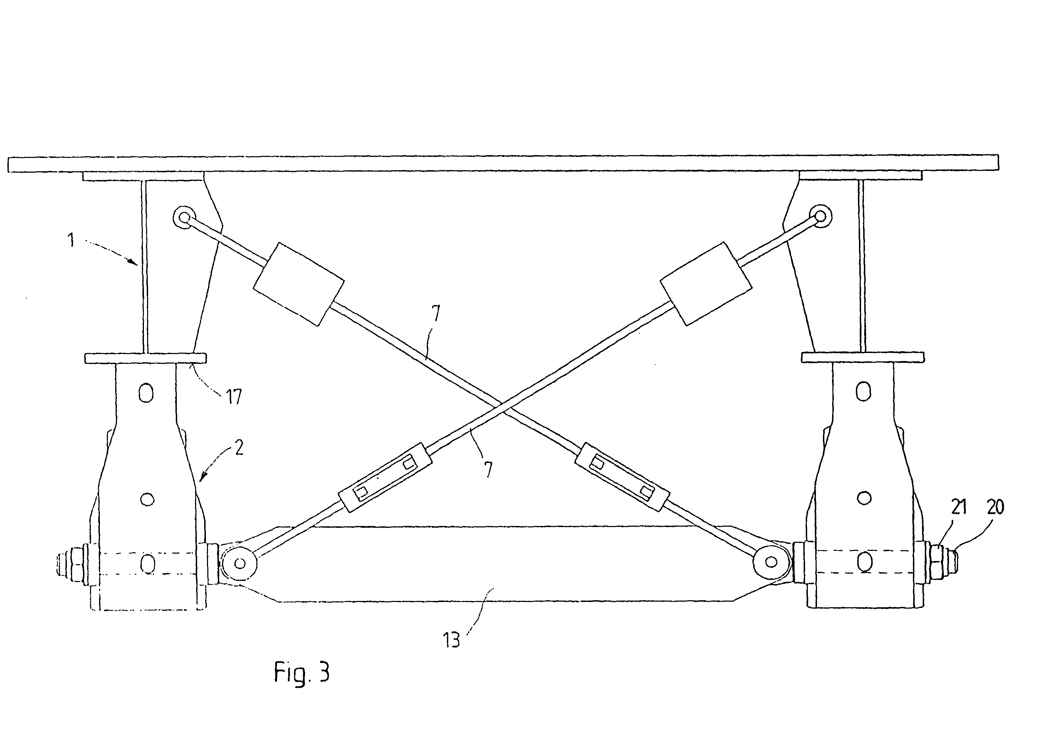

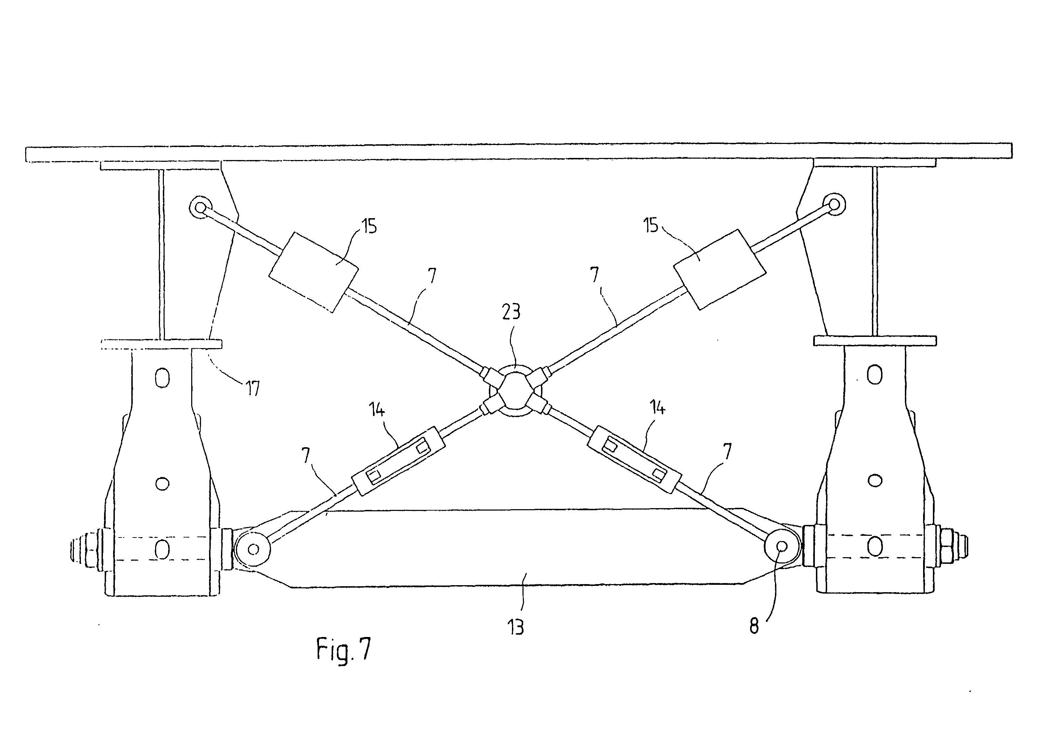

Während bei den Ausführungsformen nach den Figuren 2, 4, 6 und 8 die Stützen 2 mit den darüber angeordneten Längsträgern 1 mittels Verschraubungen 16 verbunden sind, sind bei dem Ausführungsbeispiel nach Fig. 3 sowie nach Fig. 7 die Stützen 2 mit der Unterseite 17 der Längsträger 1 verschweißt.

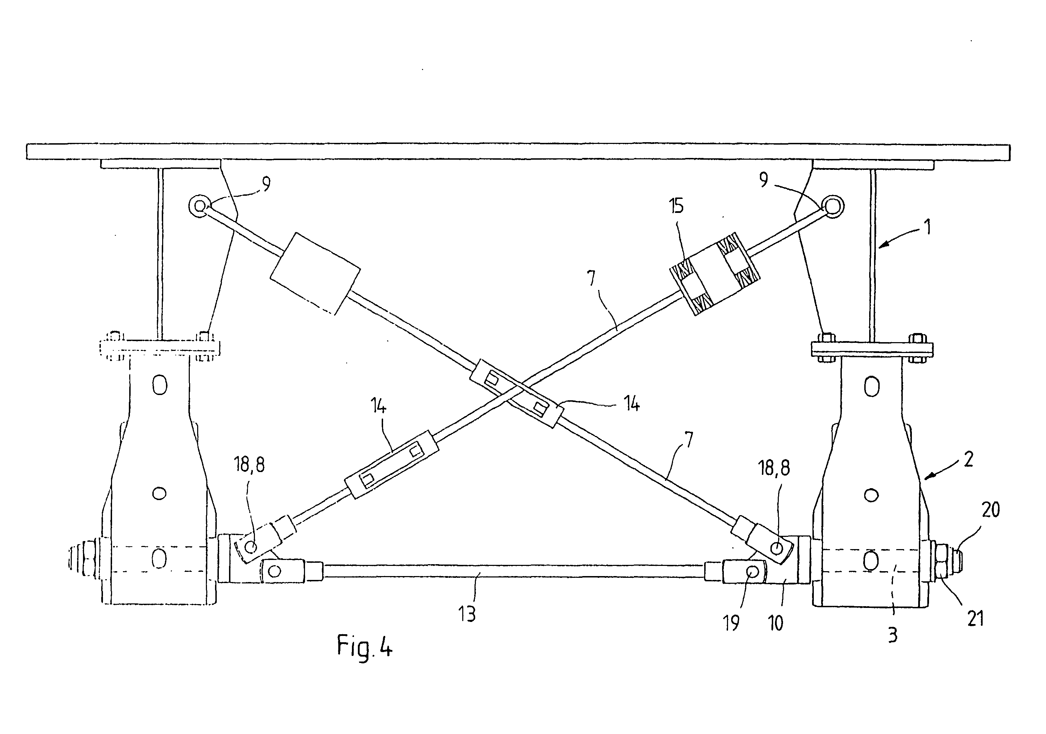

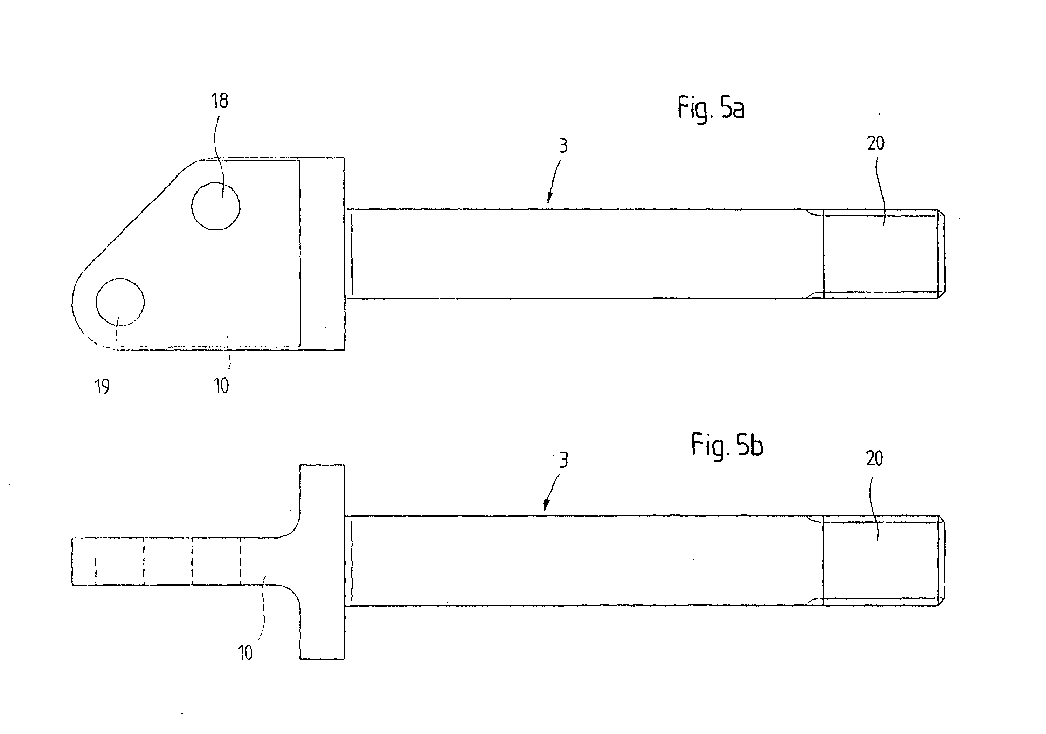

Die Ausführungsform nach den Fign. 4, 5a und 5b zeigt eine andere Variante des Bolzens 3 mit dem daran angeformten Bolzenkopf 10. An dem Bolzenkopf 10 befinden sich getrennte Befestigungsaugen 18, 19 für die gelenkige Anbindung einerseits der Zugstrebe 7 und andererseits des Druckstabes 13. An seinem anderen Ende ist der Bolzen 3 mit einem Außengewinde 20 für eine Sicherungsmutter 21 versehen.

Anstelle der Anbindung der Zugstrebe 7 und des Druckstabes 13 an dem in den Figuren 5a und 5b im einzelnen dargestellten Bolzen kann diese Anbindung auch an einer Buchse erfolgen, welche an der Stütze 2 angeformt ist und welche den Bolzen 3 aufnimmt. Auch in diesem Fall lassen sich die in den Längslenkern auftretenden Kräfte ohne Umwege in die Verstrebungsbauteile übertragen, so daß die Stützen selbst nur gering beansprucht werden.

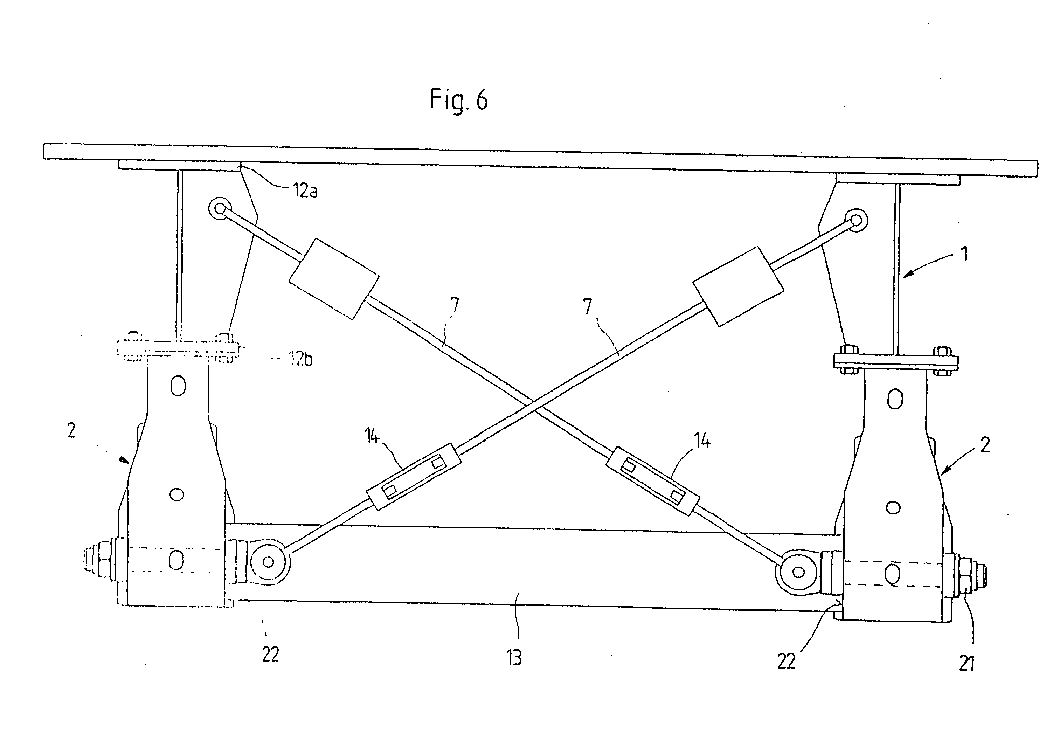

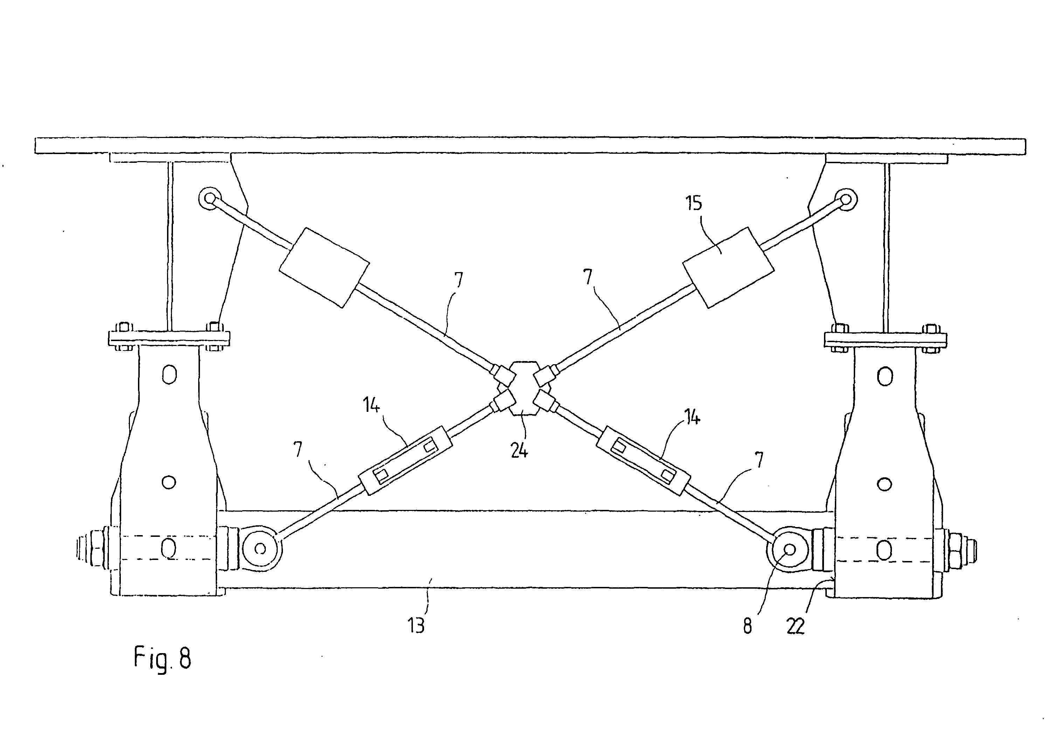

Die Ausführungsformen nach den Figuren 6 und 8 unterscheiden sich von den übrigen Ausführungsformen dadurch, daß der Druckstab 13 nicht gelenkig mit den beiden Stützen 2 verbunden ist, sondern der Druckstab 13 an deren Innenseiten 22 angeschweißt ist. Auch ein solcher verschweißter Druckstab ermöglicht bei Kurvenfahrt des Fahrzeuges noch eine ausreichend elastische Aufnahme der Rahmendeformationen.

Bei den Ausführungsformen nach den Figuren 7 und 8 sind die Zugstreben 7 nicht durchgehend ausgebildet, vielmehr laufen diese in einem zentralen Ring 23 oder einer zentralen Platte 24 zusammen, wodurch jede Zugstrebe in zwei Teilabschnitte unterteilt ist und alle Zugstreben nach Art einer Kreuzung an dem Ring 23 bzw. der Platte 24 zusammenlaufen und gekoppelt sind.

### Bezugszeichenliste

- 1: Längsträger
- 2: Stütze
- 3: Bolzen
- 4: Längslenker
- 5: Luftfeder
- 6: Achsrohr
- 7: Zugstrebe
- 8: Ende der Zugstrebe
- 9: Ende der Zugstrebe
- 10: Bolzenkopf
- 11: Blech
- 12a: Obergurt
- 12b: Untergurt
- 13: Druckstab
- 14: Spanneinrichtung
- 15: Feder
- 16: Verschraubung
- 17: Unterseite des Längsträgers
- 18: Befestigungsauge
- 19: Befestigungsauge
- 20: Außengewinde
- 21: Sicherungsmutter
- 22: Innenseite der Stütze
- 23: Ring
- 24: Platte

## Patentansprüche

1. Achskonstruktion für Nutzfahrzeuge, Nutzfahrzeuganhänger und -auflieger, mit
- unter beiden Längsträgern (1) des Fahrzeugrahmens befestigten Stützen (2) zur gelenkigen Anbindung der mit der Fahrzeugachse verbundenen Längslenker (4), wobei jede der Stützen (2) seitlich gegenüber der jeweils anderen Fahrzeugseite abgestützt ist,
- die Stützen (2) oder Teile hiervon diagonal mit der jeweils anderen Fahrzeugseite verbindenden Zugstreben (7) und
- einem horizontalen Druckstab (13) zwischen den Stützen (2),
**dadurch gekennzeichnet,**
**daß** die Zugstreben (7) jeweils mit einer eine dauernde Zugspannung in den Zugstreben erzeugenden Feder (15) versehen sind.

2. Achskonstruktion nach Anspruch 1,
**dadurch gekennzeichnet,**
**daß** die Anbindung der Zugstreben (7) an der jeweils anderen Fahrzeugseite an dem dortigen Längsträger (1) erfolgt.

3. Achskonstruktion nach Anspruch 2,
**dadurch gekennzeichnet,**
**daß** die Anbindung an in den Längsträger (1) eingeschweißten und sich quer zur Fahrzeugtängsrichtung erstreckenden Blechen (11) erfolgt.

4. Achskonstruktion nach einem der Ansprüche 1 bis 3,
**dadurch gekennzeichnet,**
**daß** die beiden Enden (8) der Zugstreben (7) über Gelenke an der Stütze (2) befestigt sind, die keine Momenten übertragen.

5. Achskonstruktion nach einem der Ansprüche 1 bis 4,
**dadurch gekennzeichnet,**
**daß** die Enden des Druckstabes über Gelenke an den Stützen (2) befestigt sind, die keine Momenten übertragen.

6. Achskonstruktion nach einem der Ansprüche 1 bis 5,
**dadurch gekennzeichnet,**
**daß** die stützenseitige Befestigung der Zugstreben (7) und/oder des Druckstabes (13) an einem Bolzen (3) erfolgt, der den Längslenker (4) gelenkig mit der Stütze (2) verbindet.

7. Achskonstruktion nach einem der Ansprüche 1 bis 5,
**dadurch gekennzeichnet,**
**daß** die stützenseitige Befestigung der Zugstreben (7) und/oder des Druckstabes (13) an einer an der Stütze (2) angeformten Buchse erfolgt, durch die ein den Längslenker (4) gelenkig mit der Stütze (2) verbindender Bolzen (3) hindurchgeführt ist.

8. Achskonstruktion nach einem der vorangehenden Ansprüche,
**gekennzeichnet durch**
Seile oder auf Zug belastbare Stangen als Zugstreben (7).

9. Achskonstruktion nach Anspruch 8,
**dadurch gekennzeichnet,**
**daß** die Zugstreben (7) jeweils mit einer in Längsrichtung der Zugstreben wirkenden Spanneinrichtung (14) versehen sind.

## Claims

1. Axle construction for commercial vehicles, commercial-vehicle trailers and semitrailers, having
- supports (2) which are fastened under both longitudinal members (1) of the vehicle frame and are intended for the articulated attachment of the longitudinal control arms (4) which are connected to the vehicle axle, each of the supports (2) being supported laterally with respect to the other side of the vehicle in each case,
- tension struts (7) connecting the supports (2) or parts thereof diagonally to the other side of the vehicle in each case, and
- a horizontal compression rod (13) between the supports (2),
**characterized in that** the tension struts (7) are in each case provided with a spring (15) which produces a permanent tensile stress in the tension struts.

2. Axle construction according to Claim 1, **characterized in that** the attachment of the tension struts (7) to the other side of the vehicle in each case takes place at the longitudinal member (1) there.

3. Axle construction according to Claim 2, **characterized in that** the attachment takes place on plates (11) which are welded into the longitudinal member (1) and extend transversely with respect to the longitudinal direction of the vehicle.

4. Axle construction according to one of Claims 1 to 3, **characterized in that** the two ends (8) of the tension struts (7) are fastened to the support (2) via joints which do not transmit any moments.

5. Axle construction according to one of Claims 1 to 4, **characterized in that** the ends of the compression rod are fastened to the supports (2) via joints which do not transmit any moments.

6. Axle construction according to one of Claims 1 to 5, **characterized in that** the support-side fastening of the tension struts (7) and/or of the compression rod (13) takes place at a bolt (3) which connects the longitudinal control arm (4) to the support (2) in an articulated manner.

7. Axle construction according to one of Claims 1 to 5, **characterized in that** the support-side fastening of the tension struts (7) and/or of the compression rod (13) takes place at a bushing which is integrally formed on the support (2) and through which a bolt (3) connecting the longitudinal control arm (4) to the support (2) in an articulated manner is guided.

8. Axle construction according to one of the preceding claims, **characterized by** cables or rods which can be loaded under tension as tension struts (7).

9. Axle construction according to Claim 8, **characterized in that** the tension struts (7) are in each case provided with a tensioning device (14) which acts in the longitudinal direction of the tension struts.

## Revendications

1. Construction d'essieu pour véhicules utilitaires, remorques et semi-remorques de véhicules utilitaires, comportant
- des appuis (2) fixés sous les deux longerons (1) du châssis du véhicule, pour l'attache articulée des bras oscillants longitudinaux (4) reliés à l'essieu du véhicule, chacun des appuis (2) étant soutenu latéralement par rapport à l'autre côté du véhicule,
- des tirants (7) reliant les appuis (2) ou parties de ceux-ci en diagonale à l'autre côté du véhicule, et
- une barre de pression (13) horizontale entre les appuis (2),
**caractérisée en ce que**
les tirants (7) sont pourvus chacun d'un ressort (15) produisant une contrainte de traction permanente dans les tirants.

2. Construction d'essieu selon la revendication 1,
**caractérisée en ce que**
l'attache des tirants (7) à l'autre côté respectif du véhicule s'effectue sur le longeron (1) se trouvant à cet endroit.

3. Construction d'essieu selon la revendication 2,
**caractérisée en ce que**
l'attache s'effectue sur des tôles (11) soudées à l'intérieur des longerons (1) et s'étendant transversalement à la direction longitudinale du véhicule.

4. Construction d'essieu selon l'une des revendications 1 à 3,
**caractérisée en ce que**
les deux extrémités (8) des tirants (7) sont fixées à l'appui (2) par des articulations qui ne transmettent aucun moment.

5. Construction d'essieu selon l'une des revendications 1 à 4,
**caractérisée en ce que**
les extrémités de la barre de pression sont fixées aux appuis (2), par des articulations qui ne transmettent aucun moment.

6. Construction d'essieu selon l'une des revendications 1 à 5,
**caractérisée en ce que**
la fixation côté appui des tirants (7) et/ou de la barre de pression (13) s'effectue sur un boulon (3) qui relie les bras oscillants longitudinaux (4) à l'appui (2), de manière articulée.

7. Construction d'essieu selon l'une des revendications 1 à 5,
**caractérisée en ce que**
la fixation côté appui des tirants (7) et/ou de la barre de pression (13) s'effectue sur une douille, formée sur l'appui (2), à travers laquelle est guidé un boulon (3) reliant les bras oscillants longitudinaux (4) à l'appui (2), de manière articulée.

8. Construction d'essieu selon l'une des revendications précédentes,
**caractérisée par**
des câbles ou des barres qui peuvent être sollicités en traction servant de tirants (7).

9. Construction d'essieu selon la revendication 8,
**caractérisée en ce que**
les tirants (7) sont pourvus chacun d'un dispositif de tension (14) agissant dans la direction longitudinale des tirants.
